(19) Europäisches Patentamt
European Patent Office
Office européen des brevets

(11) **EP 3 084 975 B1**

(12) **FASCICULE DE BREVET EUROPEEN**

(45) Date de publication et mention
de la délivrance du brevet:
**18.10.2017 Bulletin 2017/42**

(51) Int Cl.:
***H04B 1/717*** *(2011.01)*

(21) Numéro de dépôt: **14816227.4**

(22) Date de dépôt: **17.12.2014**

(86) Numéro de dépôt international:
**PCT/EP2014/078259**

(87) Numéro de publication internationale:
**WO 2015/091668 (25.06.2015 Gazette 2015/25)**

(54) **GÉNÉRATEUR D'IMPULSIONS UWB**

UWB IMPULSGEBER

UWB PULSE GENERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2013 FR 1362885**

(43) Date de publication de la demande:
**26.10.2016 Bulletin 2016/43**

(73) Titulaire: **Commissariat à l'Énergie Atomique
et aux Énergies Alternatives
75015 Paris (FR)**

(72) Inventeurs:
• **MASSON, Gilles
  F-38140 Renage (FR)**

• **HAMEAU, Frédéric
  F-38250 Saint-Nizier du Moucherotte (FR)**
• **OUVRY, Laurent
  F-38000 Grenoble (FR)**

(74) Mandataire: **Priori, Enrico
Marks & Clerk France
Conseils en Propriété Industrielle
Immeuble «Visium»
22, avenue Aristide Briand
94117 Arcueil Cedex (FR)**

(56) Documents cités:
**EP-A- 1 526 648     US-A- 6 026 125**

**Description**

L'invention concerne le domaine des télécommunications ultra large bande (UWB, de l'anglais Ultra Wide Band), et plus particulièrement la communication par impulsions très courtes d'une fréquence porteuse.

A titre indicatif, la communication UWB est réglementée pour des fréquences pouvant aller de 3 à 10,6 GHz, et les gabarits spectraux autorisés sont définis d'une part par les contraintes réglementaires (FCC aux Etats Unis, ECC en Europe, etc) et d'autre part par les contraintes normatives (normes IEEE 802.15.4a, IEEE802.15.6, etc.) ou propriétaires. On peut regrouper ces contraintes de gabarits spectraux sous le terme de "spécification" de gabarit. La largeur de bande est d'environ 1 GHz, et la durée des impulsions émises est typiquement de quelques nanosecondes. Plus généralement, un signal UWB est défini comme un signal dont la bande passante à -10dB de la densité spectrale de puissance maximale est supérieure à 500 MHz, ceci pour les fréquences au-dessus de 2,5 GHz, ou alternativement, pour les fréquences centrales inférieures à 2,5 GHz, dont la bande passante est supérieure à 20% de la fréquence centrale.

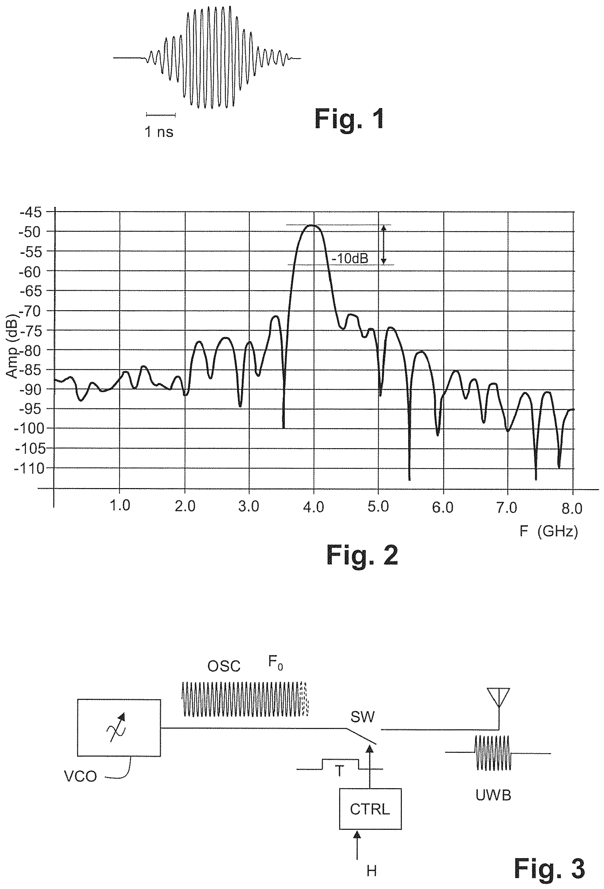

La figure 1 représente à titre d'exemple la forme générale d'une impulsion UWB de 5 nanosecondes ayant une fréquence porteuse de 4 GHz. La figure 2 représente la densité spectrale de cette impulsion. Ce spectre comporte un pic principal à la fréquence porteuse et une bande passante à - 10dB d'environ 500 MHz, mais il comporte aussi de nombreux lobes secondaires, dont la fréquence peut être proche de la fréquence porteuse. Ces pics risquent de faire sortir le spectre du gabarit imposé par la spécification, et il faut donc faire en sorte de les réduire autant que possible.

On sait théoriquement utiliser des architectures d'émetteur entièrement numériques qui permettent de bien contrôler le spectre de l'impulsion émise, pour en réduire les lobes secondaires, mais ces architectures sont difficilement compatibles avec des technologies de circuit intégré standard lorsqu'on veut fonctionner avec des fréquences supérieures à 4 GHz, et encore moins à des fréquences de 8 GHz. Ces architectures synthétisent une forme d'onde dans le domaine temporel à la façon d'un filtre numérique fonctionnant à la fréquence de Nyquist. La valeur mais aussi la précision des coefficients du filtre réalisé a un impact direct sur le niveau des lobes secondaires. Cependant, les temps de commutation des transistors des circuits numériques sont trop élevés (au moins 16 GHz pour fonctionner à 8 GHz de fréquence centrale) dans les technologies les plus courantes et il faudrait utiliser des technologies beaucoup plus coûteuses pour résoudre le problème.

Une architecture d'émetteur qui a été proposée pour réaliser des émetteurs d'impulsions UWB dans la bande de 3 à 8 GHz est une architecture utilisant un oscillateur pour générer une fréquence porteuse, et un commutateur rapide (commutateur radiofréquence) en série en aval de l'oscillateur, entre l'oscillateur et une antenne d'émission de l'impulsion UWB : le commutateur rapide est normalement bloqué et il est rendu conducteur pendant une durée très brève qui est la durée de l'impulsion UWB désirée. La sortie du commutateur fournit à l'antenne l'impulsion UWB à la fréquence porteuse de l'oscillateur. Il s'agit en quelque sorte d'un fenêtrage temporel, pendant une durée T très brève, d'une oscillation engendrée pendant un temps plus long.

La figure 3 représente le principe d'un tel émetteur UWB. Le commutateur SW peut être un commutateur à un ou plusieurs transistors, comportant éventuellement des inductances. L'oscillateur est un oscillateur à fréquence contrôlée VCO permettant d'ajuster la fréquence porteuse $F_0$. Un circuit de contrôle CTRL ferme l'interrupteur pendant une durée T qui est la durée désirée pour l'impulsion.

Le défaut des réalisations proposées jusqu'à maintenant sur la base de cette architecture est qu'elles ne permettent pas de contrôler correctement le spectre de l'impulsion émise, et en particulier elles ne permettent pas de réduire si c'est nécessaire les lobes secondaires qui risquent de faire sortir le spectre du gabarit imposé par la spécification. Seule la bande passante (au niveau du lobe principal) peut être contrôlée en agissant sur la durée de fermeture du commutateur.

Les documents suivants décrivent des générateurs d'impulsions UWB:

Xu et al., Power-Efficient Switching-Based CMOS UWB Transmitters for UWB Communications and Radar Systems. IEEE TRANSACTIONS ON MICROWAVE THEORY AND TECHNIQUES, Vol. 54, NO. 8, August 2006.

Li, The Design on CMOS Impulse Generators for Ultra-Wideband Communication and Radar Systems. THESIS THE UNIVERSITY OF TEXAS AT ARLINGTON, August 2011.

Raphaeli, et al., Ultra Wideband On-Chip Pulse Generator. Demande de brevet US 2010/0177803 A1, Juillet 2010.

Anh Tuan Phan, et al., Energy-Efficient Low-Complexity CMOS Pulse Generator for Multiband UWB Impulse Radio. IEEE TRANSACTIONS ON CIRCUITS AND SYSTEMS, Vol. 55, NO. 11, December 2008.

Barras, et al., Low-Power Ultra-Wideband Wavelets Generator With Fast Start-Up Circuit. IEEE TRANSACTIONS ON MICROWAVE THEORY AND TECHNIQUES, Vol. 54, NO. 5, May 2006.

Pelissier, et al., A 112Mb/s Full Duplex Remotely-Powered Impulse-UWB RFID Transceiver For Wireless NV-Memory Applications. IEEE JOURNAL OF SOLID-STATE CIRCUITS, Vol. 46, NO. 4, April 2011.

Le document US 6 026 125 décrit un générateur d'impulsions UWB comprenant un oscillateur suivi d'un mixer radiofréquence. Un générateur de signaux bas niveaux, connecté au mixer radiofréquence, génère l'enveloppe des impulsions UWB.

La présente invention part de l'architecture de base de la figure 3 et propose d'agir sur la résistance interne du commutateur dans l'état passant, pendant la durée de l'impulsion, pour modifier la forme de l'enveloppe de l'impulsion UWB et ainsi agir sur le spectre de celle-ci.

Le générateur d'impulsions UWB selon l'invention comprend donc un oscillateur fournissant un signal de sortie à une fréquence porteuse $F_0$ suivi d'un transistor de commutation radiofréquence et un circuit de contrôle commandant la grille du transistor pour le rendre conducteur pendant une durée T correspondant à la durée souhaitée d'une impulsion UWB, caractérisé en ce que le circuit de contrôle est agencé pour appliquer successivement au cours d'une même impulsion UWB, une première tension de grille qui rend conducteur le transistor avec une première valeur de résistance interne pendant une première partie de la durée T, puis au moins une deuxième tension de grille qui rend conducteur le transistor avec une deuxième valeur de résistance interne différente de la première valeur pendant une deuxième partie de la durée T.

Les tensions de grille différentes engendrent des résistances internes différentes du transistor dans l'état passant donc une atténuation différente de l'impulsion pendant son passage dans le transistor de commutation. Il en résulte une modification du spectre de l'impulsion émise par rapport au spectre qu'elle aurait si le transistor était simplement commandé en tout ou rien sans variation du niveau de la commande de mise en conduction.

Le circuit de contrôle peut comprendre les éléments suivants :

- deux inverseurs logiques alimentés par une tension d'alimentation, ayant leurs sorties reliées par l'intermédiaire de résistances respectives à la grille du transistor de commutation,
- et un circuit de séquencement établissant sur l'entrée du premier inverseur un premier signal logique de mise en conduction du transistor de commutation et sur l'entrée du deuxième inverseur un deuxième signal logique de mise en conduction du transistor de commutation, avec un recouvrement partiel entre le premier et le deuxième signal logique, permettant de définir au moins un intervalle de temps pendant lequel seul un des deux signaux logiques est à un niveau de mise en conduction du transistor de commutation et un intervalle de temps pendant lequel les deux signaux logiques sont à ce niveau, les deux intervalles de temps étant adjacents.

Par conséquent, la tension de grille du transistor de commutation radiofréquence prendra successivement au moins deux valeurs, en fonction du fait qu'un seul ou les deux interrupteurs appliqueront un signal de mise en conduction au transistor. Dans une phase, un seul inverseur est activé, et la tension appliquée à la grille du transistor a une valeur dépendant de la valeur de la résistance reliée à sa grille. Dans l'autre phase, les deux inverseurs sont activés simultanément et la tension appliquée à la grille dépend des deux résistances reliées à sa grille.

Par "recouvrement partiel" entre le premier et le deuxième signal logique, on entend qu'il y a au moins un moment pendant lequel l'un des signaux est à un niveau de mise en conduction du transistor sans que l'autre soit à ce niveau et un moment pendant lequel les deux signaux logiques sont à un niveau de mise en conduction. Le premier signal peut commencer seul, peut s'arrêter avant la fin du premier ou se poursuivre au-delà de la fin du premier ; ou bien les deux signaux peuvent commencer en même temps et se terminer séparément ; ou bien les deux signaux peuvent commencer séparément, se poursuivre ensemble et se terminer simultanément. L'impulsion UWB commence de toute façon en même temps que le signal logique qui est activé en premier, et se termine en même temps que le signal logique qui s'arrête en dernier.

Le signal de sortie de l'oscillateur qui fournit la fréquence porteuse peut être un signal différentiel, et on a alors deux transistors de commutation radiofréquence qui fonctionnent de manière symétrique et sont commandés de manière symétrique par les deux inverseurs.

Les inverseurs peuvent avoir des tailles de transistors différentes, la taille des transistors qui les composent jouant un rôle (par division résistive) sur la tension obtenue sur la grille du transistor de commutation, en raison du fait que la résistance interne des inverseurs n'est pas nulle.

Les résistances qui sont reliées entre la sortie d'un inverseur et la grille d'un transistor de commutation radiofréquence peuvent être composées de plusieurs résistances pouvant être commutées pour sélectionner une valeur choisie de résistance.

Les inverseurs peuvent aussi être constitués en réseau de plusieurs inverseurs en parallèle, ayant des caractéristiques de résistance de sortie différentes, un inverseur étant sélectionné en fonction des caractéristiques de résistance désirée, et les inverseurs pouvant être sélectivement mis en état de haute impédance s'ils ne sont pas sélectionnés.

On peut prévoir en outre que la valeur de la tension d'alimentation des inverseurs est modifiable, ce qui permet d'agir sur la tension effectivement appliquée à la grille du transistor de commutation, et donc d'agir sur la résistance du transistor dans l'état passant.

Enfin, lorsque l'oscillateur LC est un oscillateur à branches différentielles dont le fonctionnement est commuté par l'application ou l'interruption d'un courant d'alimentation à la paire de branches différentielles, on peut prévoir de modifier le courant d'alimentation de la paire de branches pendant l'impulsion UWB, ce qui donne une marge de manoeuvre supplémentaire pour agir sur le spectre de l'impulsion émise, en particulier pour compenser le fait que la fréquence centrale de l'impulsion peut varier en cours d'impulsion.

Cet oscillateur peut être pourvu d'un contrôle de polarité de l'oscillation pour sélectionner une phase ou une phase opposée, au démarrage de l'oscillateur.

D'autres caractéristiques et avantages de l'invention apparaîtront à la lecture de la description détaillée qui suit et qui est faite en référence aux dessins annexés dans lesquels :

- la figure 1, déjà décrite, représente une impulsion UWB avec une fréquence porteuse de 4 GHz, d'une durée d'environ 5 nanosecondes ;
- la figure 2, déjà décrite, représente le spectre de cette impulsion, avec une bande passante à -10dB d'environ 500 MHz ;
- la figure 3, déjà décrite, représente le principe d'un générateur d'impulsion à oscillateur LC et commutateur radiofréquence en aval ;
- la figure 4 représente le générateur selon l'invention avec un oscillateur d'un type particulier ;
- la figure 5 représente le profil de variation de la tension de grille du transistor de commutation pendant l'impulsion UWB ;
- la figure 6 représente un exemple de courbe de variation de la résistance interne du transistor de commutation dans l'état passant ;
- la figure 7 représente un schéma électrique équivalent du transistor de commutation ;
- la figure 8 représente un circuit de contrôle permettant de mettre en oeuvre l'invention ;
- la figure 9 représente un schéma électrique équivalent lorsqu'un seul inverseur I1 rend conducteur le transistor de commutation ;
- la figure 10 représente un schéma électrique équivalent lorsque l'autre inverseur I2 rend conducteur le transistor de commutation ;
- la figure 11 représente les signaux d'entrée appliqués au circuit de contrôle de la figure 8 et le profil de tension de grille du transistor de commutation qui en résulte ;
- la figure 12 représente un schéma complet du générateur, incluant des moyens pour contrôler la phase binaire (0 ou 180°) de l'impulsion et des moyens pour contrôler la forme du courant de l'oscillateur ;
- la figure 13 représente un chronogramme de fonctionnement du générateur de la figure 12.

L'invention reprend l'architecture de principe de la figure 3 mais avec un contrôle particulier du commutateur SW. Elle sera décrite plus en détail dans une configuration utilisant un oscillateur d'un type particulier qui est un oscillateur à charge résonante LC avec sortie symétrique, alimenté en courant par une source de courant qui est commutée pour mettre en service ou hors service l'oscillateur. Mais l'invention est applicable à d'autres types d'oscillateur.

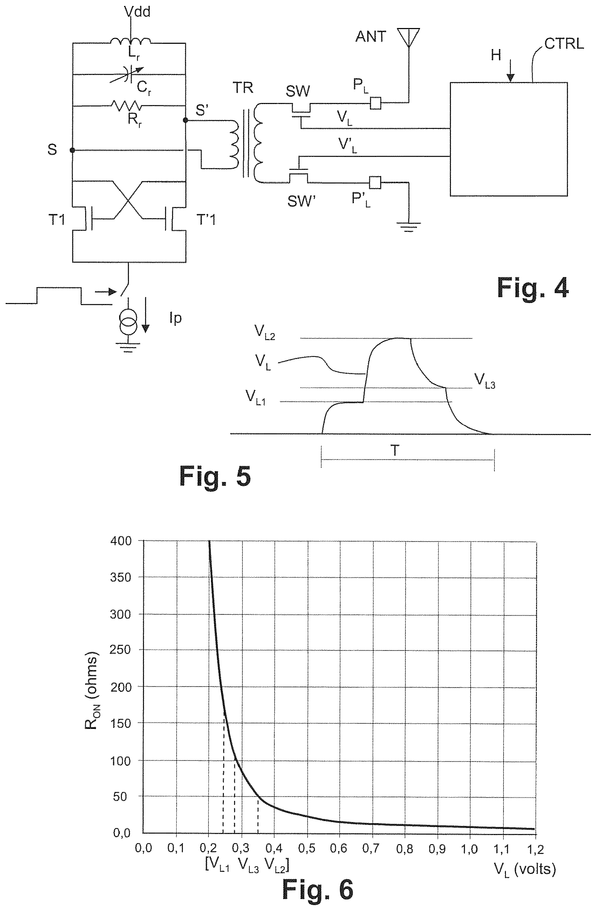

La figure 4 représente le générateur selon l'invention. L'oscillateur comporte une paire de deux branches différentielles équilibrées alimentées d'un côté par une source de tension d'alimentation Vdd, et de l'autre par un courant commun Ip. Ce courant commun est présent pendant une durée $T_{OSC}$ supérieure à la durée T de l'impulsion UWB. Il peut être permanent et n'être interrompu, pour réduire la consommation, que dans des phases où la communication UWB est interrompue. C'est le circuit de contrôle CTRL situé en aval qui sélectionnera une fenêtre temporelle de l'oscillation pendant une durée T de quelques nanosecondes qui sera la durée de l'impulsion.

Les branches différentielles comportent chacune un transistor, T1 pour la première branche, T'1 pour la deuxième branche. Une charge est insérée entre le drain du transistor et la source de tension d'alimentation Vdd. Cette charge est un circuit LC, résonant à la fréquence porteuse $F_0$ de l'impulsion UWB à émettre. Dans l'exemple représenté, la charge est partagée entre les branches ; elle comprend une inductance $L_r$ et une capacité $C_r$ en parallèle, ainsi qu'une résistance d'amortissement $R_r$ qui peut être la résistance interne propre de l'inductance. Ces éléments en parallèle sont connectés entre la sortie S de la première branche et la sortie S' de la deuxième branche. Les sorties S et S' peuvent être prises sur les drains des transistors respectifs T1 et T'1 de la première et la deuxième branche.

La source de tension d'alimentation est de préférence reliée, comme c'est le cas sur la figure 4, à un point milieu de l'inductance de charge $L_r$ pour assurer l'alimentation continue de l'oscillateur.

L'oscillation est générée entre les sorties S et S' qui sont reliées à l'enroulement primaire d'un transformateur TR.

L'inductance de charge $L_r$ du circuit résonant n'est pas obligatoirement présente si l'inductance vue du côté du primaire du transformateur a une valeur suffisante pour remplir le rôle de l'inductance $L_r$ dans le circuit résonant LC. Dans ce cas, il faut prévoir que la source de tension d'alimentation continue Vdd est reliée à un point milieu du primaire du transformateur pour pouvoir alimenter symétriquement les deux branches différentielles par la tension Vdd.

L'oscillation continue présente à la sortie du transformateur TR est appliquée à travers un commutateur sur les plots de sortie $P_L$ et $P'_L$ du circuit intégré dans lequel est réalisé le générateur d'impulsions, et de là à une antenne d'émission ANT. Le commutateur définit, lorsqu'il est rendu conducteur, une fenêtre temporelle de durée T pendant laquelle l'oscillation peut passer vers les plots de sortie. Dans une construction symétrique comme celle qui est représentée sur la figure 4, on peut prévoir que le commutateur est double et comprend deux transistors de commutation rapide reliés chacun entre une borne respective de l'enroulement secondaire du transformateur et un plot respectif de sortie. Dans une configuration non symétrique le commutateur pourrait comprendre un seul transistor.

Les commutateurs sont des transistors de commutation radiofréquence SW, SW', c'est-à-dire des transistors à commutation très rapide (plus rapide que la durée des impulsions UWB). La durée de commutation (passage de l'état bloqué à l'état passant ou réciproquement) est plusieurs fois, par exemple au moins 5 fois, plus rapide que la durée T de l'impulsion, cette dernière pouvant être d'environ 1 à 5 nanosecondes.

Un circuit de contrôle CTRL définit la fenêtre temporelle de durée T pendant laquelle l'oscillation reçue du secondaire du transformateur sera transmise par le commutateur vers les plots de sortie. En dehors de la durée T, l'oscillation continue mais n'est pas transmise.

Le circuit de contrôle a ici une fonction qui n'est pas une simple fonction de commande de commutation en tout ou rien, mais il a une fonction de commutation avec contrôle de la valeur tension de commande appliquée aux grilles des transistors SW et SW' dans l'état passant pendant la durée de l'impulsion. Il établit des valeurs de tension de grille selon une séquence bien déterminée à l'intérieur de la durée T et, à cet effet, son fonctionnement peut être piloté par une horloge H.

La figure 5 représente un exemple de profil temporel de tension $V_L$ appliquée par le circuit de contrôle CTRL à la grille de l'un des transistors (la tension de grille est la même pour les deux transistors) pendant la durée T. Cette tension comporte au moins deux niveaux différents $V_{L1}$, et $V_{L2}$ pour lesquels, compte-tenu de la technologie de réalisation du transistor, la résistance interne du transistor dans l'état passant prend deux valeurs significativement différentes. L'un des niveaux de tension, $V_{L2}$, peut être le niveau Vdd d'alimentation générale du circuit intégré. Ici, on a trois niveaux de tension $V_{L1}$, $V_{L2}$, et $V_{L3}$.

Dans l'exemple de la figure 5, on a considéré que des niveaux de tension de grille $V_{L1}$ et $V_{L3}$ plus faibles sont appliqué au début et à la fin de l'impulsion, et un niveau plus élevé, $V_{L2}$, est appliqué au milieu de l'impulsion. Il faut comprendre qu'on pourrait avoir des niveaux identiques $V_{L1} = V_{L3}$ au début et à la fin respectivement et un niveau plus élevé $V_{L2}$ au milieu ; ou encore, on pourrait au début ou à la fin (mais pas les deux à la fois) le niveau $V_{L2}$ plutôt qu'un niveau plus faible $V_{L1}$ ou $V_{L3}$.

La variation de niveau de tension sur la grille des transistors de commutation induit une variation de l'atténuation engendrée par les transistors de commutation sur le niveau de courant de l'oscillation transmise par le transformateur TR. Cette variation temporelle de l'atténuation résulte du fait que la résistance interne des transistors de commutation SW, SW', varie en fonction de la tension de grille. La variation temporelle de l'atténuation, au cours même de l'impulsion UWB, modifie les pentes de montée et de descente et donc le spectre de cette impulsion. La modification agit principalement sur les lobes secondaires du spectre et on peut donc rechercher des formes de profil de tension, tels que le profil simple à deux niveaux de la figure 5, qui améliorent le spectre dans un sens désiré, en particulier dans le sens d'une réduction des lobes secondaires pour respecter la spécification de gabarit.

L'atténuation de l'oscillation à un instant donné dépend de l'impédance de l'antenne et des impédances série des transistors dans l'état conducteur. L'impédance du transistor fait intervenir la résistance $R_{ON}$ du transistor conducteur et l'impédance de la capacité $C_{ON}$ entre drain et source de ce transistor, à savoir $1/(2\pi F_0 C_{ON})$.

La figure 6 représente un exemple de courbe de résistance interne d'un transistor de commutation radiofréquence NMOS en fonction de la tension $V_L$ qui est appliquée sur la grille du transistor. La résistance interne a une valeur d'environ 7 ohms lorsque la tension Vdd (ici : 1,2 volt) est appliquée sur la grille, une valeur de 50 ohms lorsque $V_L$ est égale à 0,35 volt, et une valeur d'environ 170 ohms lorsque $V_L$ = 0,25 volt. La variation est donc forte et sert selon l'invention à atténuer le début et/ou la fin ou même le milieu de l'impulsion transmise, pour en modifier le spectre.

Dans un exemple numérique à une fréquence porteuse $F_0$ de 4 GHz, le transistor a une résistance $R_{ON}$ qui suit la courbe de la figure 6 et qui possède une valeur de 7 ohms à une tension grille $V_L$= Vdd = 1,2 volt. Sa capacité source drain est 80 femtofarads et l'impédance d'antenne est de 50 ohms. On a trouvé la possibilité d'atténuer l'impulsion avec un rapport d'atténuation de 2,2 environ pour une tension de grille de 0,3 volt, et avec un rapport de 3,4 environ pour une tension de grille 0,24 volts. Dans un autre exemple avec les mêmes valeurs numériques mais à une fréquence $F_0$ de 8 GHz, les rapports d'atténuation sont d'environ 2 et 2,8 respectivement pour 0,3 volt et 0,24 volt.

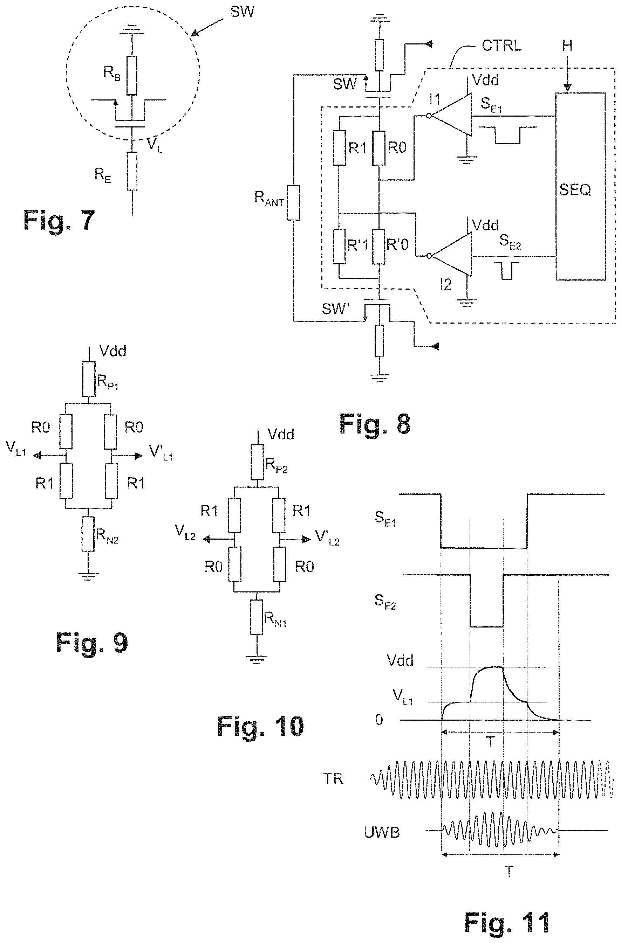

La figure 7 représente un transistor de commutation radiofréquence SW. C'est un transistor NMOS (plus rapide et plus conducteur que les transistors PMOS). Sa particularité est que son canal n'est pas directement au potentiel du substrat (0 volt) mais est relié au substrat par l'intermédiaire d'une résistance $R_B$ de quelques kilo-ohms, dont la fonction est de réduire la conductivité des diodes drain-substrat et source-substrat, ce qui améliore la transmission de puissance et réduit les pertes d'insertion. Par ailleurs sa grille est commandée par l'intermédiaire d'une résistance série $R_E$ de quelques kilo-ohms qui réduit les variations de la tension grille-source lorsque la tension de commande varie.

La figure 8 représente un exemple préférentiel de réalisation du circuit de contrôle CTRL permettant la mise en oeuvre de l'invention. Les sources des transistors de commutation sont reliées à une antenne symbolisée par une impédance d'antenne $R_{ANT}$. Les drains reçoivent les signaux issus du secondaire du transformateur TR. Les grilles reçoivent une tension de grille $V_L$ fournie par le circuit de contrôle. Le circuit de contrôle comporte deux inverseurs logiques I1 et I2, et quatre résistances : R0 et R'0, de mêmes valeurs, reliées respectivement entre la sortie de l'inverseur I1 et les grilles des transistors de commutation SW et SW' ; R1 et R'1, de mêmes valeurs, reliées respectivement entre la sortie de l'inverseur I2 et les grilles des transistors de commutation SW et SW'.

Les résistances R0, R'0, R1, R'1 constituent des charges résistives en sortie des inverseurs I1 et I2 et la tension de sortie produite par les inverseurs dans l'état passant dépend non seulement de la valeur de ces charges mais aussi des résistances internes propres des inverseurs. Les résistances internes propres des inverseurs dépendent par ailleurs de leur état logique de sortie.

Les inverseurs reçoivent d'un circuit de séquencement SEQ piloté par une horloge H des signaux logiques d'entrée respectifs $S_{E1}$ et $S_{E2}$, qui sont des signaux de blocage puis de mise en conduction des transistors de commutation SW et SW'. Ces signaux sont au niveau logique haut en dehors des impulsions UWB et les inverseurs bloquent alors la conduction des transistors. Ils descendent au niveau bas pendant des créneaux temporels dont la combinaison produit un profil de tension de grille tel que par exemple celui de la figure 5. Ils n'ont pas la même durée et ils sont en recouvrement partiel ; la durée totale depuis le premier front de descente des créneaux jusqu'au dernier front de montée des créneaux, est la durée T de l'impulsion.

Lorsque les deux inverseurs reçoivent en entrée un signal de blocage des transistors SW et SW' ($S_{E1}$ et $S_{E2}$ au niveau logique haut), ils fournissent tous les deux une tension de sortie nulle et cette tension est reportée sur les grilles des transistors de commutation SW et SW'.

Lorsqu'ils reçoivent tous les deux en entrée un signal de mise en conduction des transistors SW et SW' ($S_{E1}$ et $S_{E2}$ au niveau logique bas) ils fournissent tous les deux une tension de sortie Vdd et cette tension est reportée sur les grilles des transistors de commutation.

Mais lorsque l'un des inverseurs reçoit un signal de blocage et l'autre reçoit un signal de mise en conduction, on peut calculer la tension intermédiaire $V_L$ appliquée aux grilles en fonction des résistances R0 et R1 et des résistances internes des inverseurs.

Les inverseurs sont en général constitués d'une paire de transistors en série qui sont un transistor PMOS et un transistor NMOS. En principe, le transistor NMOS conduit pour fournir un signal de blocage aux transistors SW et SW' et l'impédance interne de l'inverseur est alors la résistance $R_N$ du transistor NMOS dans l'état conducteur ; inversement, le transistor PMOS conduit pour fournir un signal de mise en conduction et l'impédance interne de l'inverseur est alors la résistance $R_P$ du transistor PMOS dans l'état conducteur. Les résistances $R_N$ et $R_P$ sont en général différentes mais sont en principe identiques pour les deux inverseurs. Toutefois, on peut prévoir que les inverseurs sont différents et ont des résistances internes différentes aussi bien pour le transistor NMOS que pour le transistor PMOS.

Si l'inverseur I1 est seul à fournir un signal de mise en conduction, sa résistance interne est $R_{P1}$ au moment où la résistance interne de l'inverseur I2 est $R_{N2}$. On peut donc considérer qu'on a un pont diviseur résistif alimenté entre la tension d'alimentation Vdd et la masse ; ce pont diviseur fournit des tensions intermédiaires identiques $V_L$ et $V'_L$ au point de jonction entre les résistances R0 et au point de jonction entre les résistances R1. Ces tensions intermédiaires sont appliquées sur les grilles des transistors de commutation rapide.

Le schéma équivalent du pont diviseur est représenté sur la figure 9 dans le cas où l'inverseur I1 est seul à fournir un signal de mise en conduction, et sur la figure 10 dans le cas où l'inverseur I2 est seul à fournir un signal de mise en conduction. Les résistances R0 et R'0 sont identiques et ont été représentées par deux résistances R0. De même pour R1 et R'1.

On peut montrer que dans le premier cas, la tension $V_L = V'_L$ est :

$$V_{L1} = V'_{L1} = Vdd \times [R1 + 2R_{N2}]/[2R_{N2} + 2R_{P1} + R0 + R1],$$

alors que dans le deuxième cas elle devient :

$$V_{L3} = V'_{L3} = Vdd \times [R0 + 2R_{N1} +]/[2R_{N1} + 2R_{P2} + R0 + R1].$$

Par exemple, si $R_{N1}$ = 500 ohms, $R_{N2}$ = 250 ohms, $R_{P1}$ = 4000 ohms, $R_{p2}$ = 5000 ohms ; si Vdd = 1,2 volt et si on choisit R0 = 2500 ohms et R1 = 2000 ohms, on trouvera que $V_{L1}$ = 0,23 volt environ et $V_{L3}$ = 0,27 volts.

Sur la courbe de la figure 6, on voit que les résistances des transistors de commutation rapide sont alors d'environ 240 ohms et 120 ohms respectivement.

Si on utilise un profil tel que celui de la figure 5, seul l'inverseur I1 sera activé pour la mise en conduction des transistors SW et SW' au début de l'impulsion, puis les deux interrupteurs seront activés simultanément au milieu de l'impulsion, et enfin, seul l'inverseur I2 sera activé à la fin de l'impulsion. La résistance du transistor de commutation radiofréquence à l'état passant sera de 240 ohms au début, puis d'environ 7 ohms, puis de 120 ohms.

Pour définir précisément et de manière commandée les valeurs de tension $V_L$ souhaitées pour chaque phase, on peut prévoir que les résistances R0 et/ou R1 sont réalisées par un réseau de résistances en parallèle pouvant être mises en service ou hors service par des commutateurs pour donner une valeur désirée à R0 et/ou R1.

On peut également prévoir que chaque inverseur est constitué en réseau de plusieurs inverseurs en parallèle, ayant des caractéristiques d'impédance de sortie $R_P$, $R_N$ différentes, un inverseur étant sélectionné en fonction des caractéristiques de résistance désirée, et les inverseurs pouvant être sélectivement mis en état de haute impédance s'ils ne sont pas sélectionnés.

Enfin, comme la valeur de la tension d'alimentation des inverseurs joue un rôle dans le calcul de $V_L$, on peut prévoir que cette tension d'alimentation n'est pas nécessairement égale à la tension d'alimentation générale Vdd. Par exemple, la tension d'alimentation des inverseurs est une tension plus réduite que Vdd ; elle peut être obtenue en insérant une résistance ou des diodes ou tout autre élément de régulation entre l'alimentation générale Vdd et les sources des transistors composant les inverseurs. La résistance ou les diodes peuvent être commandables pour définir une tension d'alimentation désirée des inverseurs, et cette tension d'alimentation peut être différente pour les deux inverseurs.

La figure 11 représente un chronogramme de mise en conduction des deux interrupteurs I1 et I2 par les signaux $S_{E1}$ et $S_{E2}$ produits dans le circuit de contrôle CTRL et appliqués aux entrées de inverseurs I1 et I2 (mise en conduction des transistors de commutation pour $S_{E1}$ ou $S_{E2}$ au niveau bas) ; le profil de tensions $V_L$, $V_{L'}$ qui en résulte sur les grilles des transistors est représenté, dans le cas où seul l'interrupteur I1 est activé en début et en fin d'impulsion ; la tension $V_L$ prend successivement les valeurs $V_{L1}$, $V_{L2}$=Vdd, et à nouveau $V_{L1}$. On a également représenté l'oscillation apparaissant sur le secondaire du transformateur TR et l'impulsion UWB pendant la fenêtre de durée T, avec une enveloppe d'amplitude d'impulsion atténuée au début et à la fin de l'impulsion.

Dans ce qui précède, on a considéré que l'oscillateur fonctionnait avec un courant constant Ip avant, pendant et après la durée T de l'impulsion UWB, ce qui veut dire qu'on commutait en tout ou rien une source de courant constant de valeur Ip, pour la mettre en service lorsqu'on voulait établir une oscillation, et pour la mettre hors service lorsqu'on ne voulait pas établir une oscillation.

Cependant, on peut prévoir que la source de courant est commutée progressivement entre plusieurs valeurs Ip1, Ip2, Ip3, etc....

Dans ce cas, un circuit de commutation de courant CCOM fournit le courant Ip. Ce circuit comporte plusieurs sources de courant en parallèle, permettant de fournir des valeurs de courant Ip1, Ip2, Ip3, etc..., et des interrupteurs associés à chaque source de courant pour commander sélectivement les sources pour établir le courant désiré à un instant donné. Chaque valeur de courant peut être établie soit par une seule source ayant la valeur Ip1, Ip2, Ip3, etc..., soit par plusieurs sources en parallèles dont la somme est égale à Ip1 ou Ip2 ou Ip3, etc. Un séquenceur SEQ2 piloté par l'horloge générale H définit précisément les instants de commutation de courant.

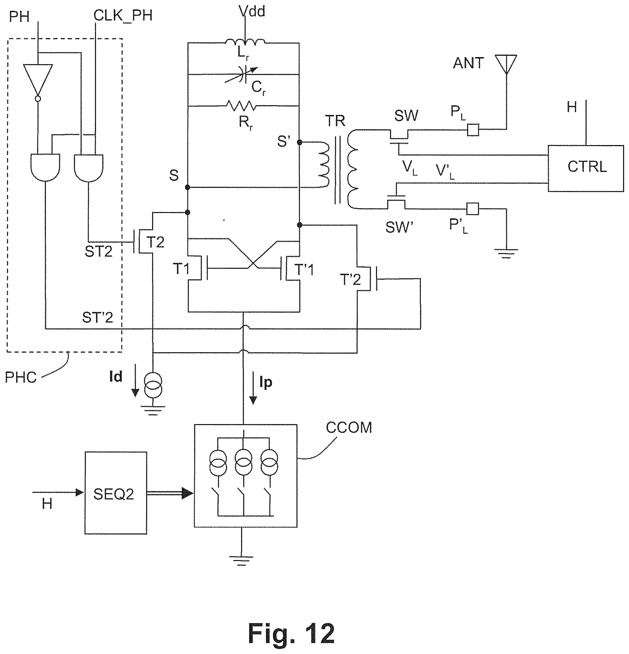

La figure 12 représente l'oscillateur LC commuté à courant variable, avec les mêmes éléments qu'à la figure 4 et un circuit de commutation de courant CCOM.

Dans le cas où l'oscillateur LC comporte ainsi plusieurs sources de courant pouvant être commutées selon des séquences très précises, on peut prévoir qu'on modifie la valeur du courant de source pendant l'impulsion de durée T. Cette modification induit des changements de niveau de l'oscillation reçue par l'antenne en aval des transistors de commutation radiofréquence SW, SW'. Ces changements de niveau peuvent être combinés avec les changements d'atténuation introduits par les transistors de commutation pour affiner le réglage de spectre de l'impulsion UWB.

Tous les signaux de commande (signaux qui commandent les différentes valeurs de courant et les signaux qui définissent les différentes tensions de grille des transistors de commutation radiofréquence) doivent être pilotés conjointement afin de répondre au besoin de respecter la spécification de gabarit spectral.

Pour une communication en modulation de fréquence, on peut agir sur la valeur de la capacité variable $C_r$ de l'oscillateur (figure 4 ou figure 12) pour moduler la fréquence d'une impulsion à l'autre. La capacité peut alors être constituée d'une diode varactor ou l'équivalent ; la capacité varie en fonction d'une tension de polarisation appliquée à la diode et la tension de polarisation varie par exemple entre deux valeurs ; cela permet une modulation binaire en fonction d'une information binaire à transmettre, et la variation de fréquence qui en résulte peut être détectée dans un récepteur.

Pour une communication en modulation d'amplitude, on peut agir sur la valeur du courant d'alimentation Ip de la paire différentielle au sommet de l'enveloppe de variation du niveau de signal au cours de l'impulsion. En modulant la valeur du courant d'alimentation de manière binaire entre deux niveaux (ou en tout ou rien pour une modulation OOK) d'une impulsion à la suivante, on module en amplitude l'impulsion émise et cette modulation peut être détectée dans un détecteur.

Pour une communication en modulation de phase binaire (BPSK), on peut adjoindre à l'oscillateur comme cela est représenté sur la figure 12 deux branches d'injection de courant reliées respectivement aux deux sorties S et S', et un circuit de commande de phase autorisant une injection de courant soit dans l'une soit dans l'autre branche d'injection au tout début de la mise en oscillation de l'oscillateur, c'est-à-dire au tout début de l'application d'un courant d'alimentation Ip à la paire différentielle, après quoi le courant injecté est supprimé dans les deux branches.

Ainsi, au début de l'impulsion, les branches différentielles sont déséquilibrées à cause du courant injecté dans l'une des sorties, et une phase de démarrage de l'oscillation est définie en fonction du sens de ce déséquilibre. Deux phases opposées sont possibles selon le sens du déséquilibre puisque c'est soit l'une des branches différentielles soit l'autre qui devient conductrice en premier lorsque le circuit de commutation de courant autorise le passage d'un courant dans la paire de branches différentielles.

La figure 12 fait apparaître ces deux branches d'injection et le circuit de commande de phase PHC.

Le groupe de deux branches de dérivation comporte une source de courant d'injection (courant d'amplitude Id) commune aux deux branches réunies à leur base ; les branches d'injection comportent chacune un transistor respectif T2, T'2 ; la source de courant d'injection tire un courant Id des deux branches d'injection réunies à leur base par les émetteurs de ces deux transistors. Les transistors T2 et T'2 ne sont pas conducteurs en même temps, de sorte que le courant(-Id) est injecté soit dans la sortie S soit dans la sortie S' selon que c'est le transistor T2 ou le transistor T'2 qui est rendu conducteur. Les transistors T2 et T'2 peuvent être bloqués simultanément lorsqu'on ne veut injecter de courant ni de la sortie S ni de la sortie S'.

Selon la phase désirée au démarrage de l'oscillation, le transistor T2 ou le transistor T'2 est rendu conducteur dès le début de l'oscillation, c'est-à-dire juste avant le début de l'application d'un courant Ip à l'oscillateur ; puis ce transistor reste conducteur pendant un court instant, après quoi il est à nouveau bloqué pendant tout le reste de la durée de l'oscillation.

Si c'est le transistor T2 qui est conducteur au début de l'oscillation, c'est le transistor T1 qui tendra à conduire initialement lors du démarrage de l'oscillation. Si au contraire c'est le transistor T'2 qui est conducteur pendant la première partie de la durée T, c'est le transistor T'1 qui tendra à conduire initialement plus que le transistor T1 lors du démarrage de l'oscillation. La phase de démarrage sera donc inversée selon le côté à partir duquel on injecte le courant Id. Cette phase se conserve ensuite pendant toute la durée de l'oscillation.

Le circuit de commande de phase établit donc initialement un signal de commande de mise en conduction ST2 sur la grille du transistor T2 ou un signal de commande ST'2 sur la grille du transistor T'2 selon la phase désirée. Ces signaux sont établis de préférence à partir d'un signal de synchronisation périodique CLK_PH composé de créneaux qui définissent à chaque période le début et la fin de la mise en service d'un courant de dérivation ; ces créneaux sont appliqués à deux portes ET qui reçoivent l'une un signal logique PH de sélection de phase PH et l'autre l'inverse PH_B de ce signal PH par l'intermédiaire d'un inverseur. Les sorties des portes ET fournissent les signaux ST2 et ST'2 appliqués aux grilles des transistors T2 et T'2.

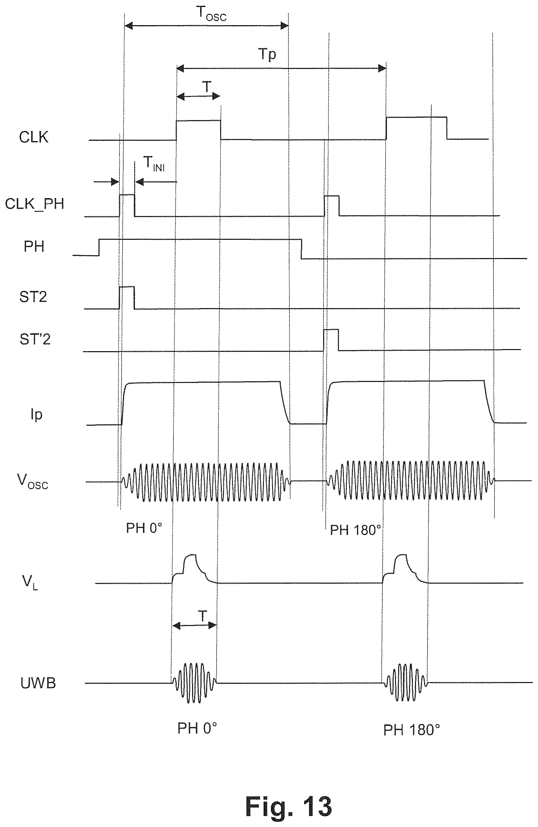

Le chronogramme de la figure 13 représente les signaux de commande de phase et l'impulsion UWB générée, avec deux valeurs de phases différentes 0 et 180° pour les deux impulsions UWB représentées ; tous ces signaux sont établis par des circuits de séquencement à partir d'une horloge générale H non représentée, permettant de définir très précisément les instants de début et de fin des différents signaux.

Les signaux représentés sont les suivants :

- CLK, représentant la périodicité des impulsions UWB ; CLK est représenté sous forme de créneaux périodiques de durée T et de période Tp, correspondant à la cadence désirée pour l'émission des impulsions UWB ;
- signal de calage temporel CLK_PH de même période Tp et dont la durée $T_{INI}$, définit la durée pendant laquelle les signaux ST2 ou ST'2 doivent être appliqués pendant l'initialisation de l'oscülation ;
- signal de sélection de phase PH, d'abord au niveau logique haut pour définir une phase 0, puis au niveau bas pour définir une phase 180° ;
- signal ST2 qui est engendré par une des portes ET pour la phase zéro ;
- signal ST'2 qui est engendré par l'autre porte ET pour la phase opposée 180° ;
- courant Ip appliqué à la paire différentielle (dans le cas plus simple d'un courant Ip établi en un seul échelon constant pendant toute la durée de l'oscillation) ; ce courant est établi avec la période Tp d'émission des impulsions UWB, et pendant une durée $T_{OSC}$ plus courte que Tp ;
- oscillation $V_{OSC}$ engendrée par le courant Ip, avec une phase de démarrage de cette oscillation qui a deux valeurs opposées selon que c'est le signal ST2 ou le signal ST'2 qui est émis au démarrage de l'oscillation ;
- tension $V_L$ de mise en conduction des transistors de commutation radiofréquence SW et SW' pendant le créneau temporel de durée T et avec un profil permettant une atténuation variable au cours de cette durée ;
- impulsion UWB pendant le créneau d'horloge de durée T, qui reproduit la phase de la tension d'oscillation $V_{OSC}$, la première impulsion ayant une phase 0° et la deuxième ayant une phase 180°.

Sur la figure 13, on a considéré qu'on n'agit pas sur le courant Ip pendant la durée T, mais comme expliqué plus haut, on pourrait le faire dès lors que l'oscillateur LC commuté comprend plusieurs sources de courant et des circuits de commande de ces sources synchronisés avec les horloges qui génèrent le début et la fin des impulsions UWB.

**Revendications**

1. Générateur d'impulsions UWB comprenant un oscillateur fournissant un signal de sortie à une fréquence porteuse $F_0$ suivi d'un transistor de commutation radiofréquence (SW, SW') et un circuit de contrôle (CTRL) commandant la grille du transistor pour le rendre conducteur pendant une durée T correspondant à la durée souhaitée d'une impulsion UWB, **caractérisé en ce que** le circuit de contrôle est agencé pour appliquer successivement au cours d'une même impulsion UWB, une première tension de grille ($V_{L1}$) qui rend conducteur le transistor avec une première valeur de résistance interne pendant une première partie de la durée T, puis au moins une deuxième tension de grille (Vdd) qui rend conducteur le transistor avec une deuxième valeur de résistance interne différente de la première valeur pendant une deuxième partie de la durée T.

2. Générateur d'impulsions UWB selon la revendication 1, **caractérisé en ce que** le circuit de contrôle comprend :

   - deux inverseurs logiques (I1, I2) alimentés par une tension d'alimentation (Vdd), ayant leurs sorties reliées par l'intermédiaire de résistances respectives (R0, R1) à la grille du transistor de commutation,
   - et un circuit de séquencement (SEQ) établissant sur l'entrée du premier inverseur un premier signal logique de mise en conduction du transistor de commutation et sur l'entrée du deuxième inverseur un deuxième signal logique de mise en conduction du transistor de commutation, avec un recouvrement partiel entre le premier et le deuxième signal logique, permettant de définir au moins un intervalle de temps pendant lequel seul un des deux signaux logiques est à un niveau de mise en conduction du transistor de commutation et un intervalle de temps pendant lequel les deux signaux logiques sont à ce niveau, les deux intervalles de temps étant adjacents.

3. Générateur d'impulsions UWB selon la revendication 2, **caractérisé en ce que** le signal de sortie de l'oscillateur qui fournit la fréquence porteuse est un signal différentiel, et il y a deux transistors de commutation radiofréquence qui fonctionnent de manière symétrique et sont commandés de manière symétrique par les deux inverseurs.

4. Générateur d'impulsions UWB selon l'une des revendications 2 et 3, **caractérisé en ce que** les résistances qui sont reliées entre la sortie d'un inverseur et la grille d'un transistor de commutation radiofréquence sont composées de plusieurs résistances pouvant être commutées pour sélectionner une valeur choisie de résistance.

5. Générateur d'impulsions UWB selon l'une des revendications 2 à 4, **caractérisé en ce que** les inverseurs sont constitués en réseau de plusieurs inverseurs en parallèle, ayant des caractéristiques d'impédance de sortie différentes, un inverseur étant sélectionné en fonction des caractéristiques de résistance désirée, et les inverseurs pouvant être sélectivement mis en état de haute impédance s'ils ne sont pas sélectionnés.

6. Générateur d'impulsions UWB selon l'une des revendications 2 à 5, **caractérisé en ce que** la valeur de la tension d'alimentation des inverseurs est modifiable.

7. Générateur d'impulsions UWB selon l'une des revendications précédentes, **caractérisé en ce que** l'oscillateur LC est un oscillateur à branches différentielles dont le fonctionnement est commuté par l'application ou l'interruption d'un courant d'alimentation à la paire de branches différentielles, et **en ce qu'**il est prévu des moyens pour modifier le courant d'alimentation de la paire de branches pendant l'impulsion UWB.

8. Générateur d'impulsions UWB selon la revendication 7, **caractérisé en ce qu'**il comporte des moyens pour injecter un courant dans une des sorties des branches différentielles pour déséquilibrer celles-ci pendant une phase de démarrage de l'impulsion UWB afin d'imposer une phase d'oscillation au démarrage.

**Patentansprüche**

1. Impulsgenerator UWB, der einen Oszillator umfasst, der ein Ausgangssignal mit einer Trägerfrequenz $F_0$, gefolgt von einem Hochfrequenzschalttransistor (SW, SW') und einer Kontrollschaltung (CTRL) liefert, die das Gate des Transistors steuert, um ihn während einer Dauer T leitend zu machen, die der gewünschten Dauer eines UWB-Impulses entspricht, **dadurch gekennzeichnet, dass** die Kontrollschaltung ausgelegt wird, um nacheinander während desselben UWB-Impulses eine erste Gate-Spannung ($V_{L1}$), die den Transistor mit einem ersten Wert des Innenwiderstands während eines ersten Teils der Dauer T leitend macht, danach mindestens eine zweite Gate-Spannung (Vdd), die den Transistor mit einem zweiten Wert des Innenwiderstands ungleich dem ersten Wert während eines zweiten Teils der Dauer T leitend macht, anzuwenden.

2. Impulsgenerator UWB nach Anspruch 1, **dadurch gekennzeichnet, dass** die Kontrollschaltung umfasst:

- zwei durch eine Versorgungsspannung (Vdd) versorgte Logikinverter (I1, I2), deren Ausgänge mit Hilfe von jeweiligen Widerständen (R0, R1) mit dem Gate des Umschalttransistors verbunden sind,
- und eine Sequenzierungsschaltung (SEQ), die auf dem Eingang des ersten Inverters ein erstes Logiksignal zum Einschalten des Umschalttransistors in einen leitenden Zustand und auf dem Eingang des zweiten Inverters ein zweites Logiksignal zum Einschalten des Umschalttransistors in einen leitenden Zustand mit einer teilweisen Überschneidung zwischen dem ersten und dem zweiten Logiksignal erstellt, die mindestens ein Zeitintervall, während dessen nur eins der zwei Logiksignale auf einem Pegel zum Einschalten des Umschalttransistors in einen leitenden Zustand ist und ein Zeitintervall zu definieren erlaubt, während dessen die zwei Logiksignale auf diesem Pegel sind, wobei die zwei Zeitintervalle angrenzend sind.

3. Impulsgenerator UWB nach Anspruch 2, **dadurch gekennzeichnet, dass** das Ausgangssignal des Oszillators, das die Trägerfrequenz liefert, ein Differenzsignal ist, und es zwei Hochfrequenzschalttransistoren gibt, die auf eine symmetrische Weise funktionieren und auf eine symmetrische Weise durch die zwei Inverter gesteuert werden.

4. Impulsgenerator UWB nach einem der Ansprüche 2 und 3, **dadurch gekennzeichnet, dass** die Widerstände, die zwischen dem Ausgang eines Inverters und dem Gate eines Hochfrequenzschalttransistors verbunden werden, aus mehreren Widerständen gebildet werden, die umgeschaltet werden können, um einen gewählten Widerstandswert auszuwählen.

5. Impulsgenerator UWB nach einem der Ansprüche 2 bis 4, **dadurch gekennzeichnet, dass** die Inverter aus einem Netz mehrerer paralleler Inverter bestehen, wobei sie verschiedene Ausgangsimpedanzeigenschaften haben, wobei ein Inverter in Abhängigkeit von den gewünschten Widerstandseigenschaften ausgewählt wird und wobei die Inverter selektiv in den Zustand hoher Impedanz gebracht werden können, wenn sie nicht ausgewählt werden.

6. Impulsgenerator UWB nach einem der Ansprüche 2 bis 5, **dadurch gekennzeichnet, dass** der Wert der Versorgungsspannung des Inverters änderbar ist.

7. Impulsgenerator UWB nach einem der vorhergehenden Ansprüche, **dadurch gekennzeichnet, dass** der Oszillator LC ein Oszillator mit Differentialzweigen ist, dessen Wirkungsweise durch die Anwendung oder die Unterbrechung eines Versorgungsstroms zu dem Paar der Differentialzweige umgeschaltet wird, und dass Mittel vorgesehen werden, um den Versorgungsstrom des Paars der Zweige während des UWB-Impulses zu verändern.

8. Impulsgenerator UWB nach Anspruch 7, **dadurch gekennzeichnet, dass** er Mittel aufweist, um einen Strom in einen der Ausgänge der Differentialzweige einzuspeisen, um diese während einer Startphase des UWB-Impulses aus dem Gleichgewicht zu bringen, um eine Schwingungsphase beim Start zu bedingen.

**Claims**

1. A UWB pulse generator comprising an oscillator providing an output signal at a carrier frequency $F_0$ followed by a radiofrequency switching transistor (SW, SW') and a control circuit (CTRL) controlling the gate of the transistor in order to make it conductive for a duration T that corresponds to the desired duration of a UWB pulse, **characterised in that** the control circuit is arranged to successively apply, during the same UWB pulse, a first gate voltage ($V_{L1}$) that makes the transistor conductive with a first internal resistance value during a first part of the duration T, then at least one second voltage gate (Vdd) that makes the transistor conductive with a second internal resistance value different to the first value during a second part of the duration T.

2. The UWB pulse generator according to claim 1, **characterised in that** the control circuit comprises:

- two logic inverters (I1, I2) supplied with a power supply voltage (Vdd), with their outputs connected to the gate of the switching transistor by means of respective resistors (R0, R1);
- and a sequencing circuit (SEQ) establishing, on the input of the first inverter, a first logic signal for making the switching transistor conductive and, on the input of the second inverter, a second logic signal for making the switching transistor conductive, with a partial overlap between the first and the second logic signal, allowing the definition of at least one time interval, during which only one of the two logic signals is at a level for making the switching transistor conductive, and of a time interval, during which the two logic signals are at this level, the two time intervals being adjacent.

3. The UWB pulse generator according to claim 2, **characterised in that** the output signal of the oscillator that provides the carrier frequency is a differential signal and there are two radiofrequency switching transistors that operate symmetrically and are symmetrically controlled by the two inverters.

4. The UWB pulse generator according to any one of claims 2 to 3, **characterised in that** the resistors that are connected between the output of an inverter and the gate of a radiofrequency switching transistor are made up of a plurality of resistors that can be switched in order to select a selected resistance value.

5. The UWB pulse generator according to any one of claims 2 to 4, **characterised in that** the inverters are made up of a network of a plurality of parallel inverters with different output impedance characteristics, an inverter being selected as a function of the desired resistance characteristics, and the inverters being able to be selectively placed in a * high impedance state if they are not selected.

6. The UWB pulse generator according to any one of claims 2 to 5, **characterised in that** the value of the power supply voltage of the inverters is modifiable.

7. The UWB pulse generator according to any one of the preceding claims, **characterised in that** the oscillator LC is an oscillator with differential branches, the operation of which is switched by the application or interruption of a power supply current on the pair of differential branches, and **in that** means are provided for modifying the power supply current of the pair of branches during the UWB pulse.

8. The UWB pulse generator according to claim 7, **characterised in that** it comprises means for injecting a current into one of the outputs of the differential branches in order to unbalance them during a UWB pulse initiation phase in order to impose an oscillation phase upon initiation.

Fig. 1

1 ns

-10dB

Fig. 2

OSC   $F_0$

SW

VCO

T

CTRL

H

UWB

Fig. 3

Fig. 4

Fig. 5

Fig. 6

**Fig. 7**

**Fig. 8**

**Fig. 9**

**Fig. 10**

**Fig. 11**

**Fig. 12**

**Fig. 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100177803 A1

- US 6026125 A

**Littérature non-brevet citée dans la description**

- **XU et al.** Power-Efficient Switching-Based CMOS UWB Transmitters for UWB Communications and Radar Systems. *IEEE TRANSACTIONS ON MICROWAVE THEORY AND TECHNIQUES,* Août 2006, vol. 54 (8

- **LI.** The Design on CMOS Impulse Generators for Ultra-Wideband Communication and Radar Systems. *THESIS THE UNIVERSITY OF TEXAS AT ARLINGTON,* Août 2011

- **ANH TUAN PHAN et al.** Energy-Efficient Low-Complexity CMOS Pulse Generator for Multiband UWB Impulse Radio. *IEEE TRANSACTIONS ON CIRCUITS AND SYSTEMS,* Décembre 2008, vol. 55 (11

- **BARRAS et al.** Low-Power Ultra-Wideband Wavelets Generator With Fast Start-Up Circuit. *IEEE TRANSACTIONS ON MICROWAVE THEORY AND TECHNIQUES,* Mai 2006, vol. 54 (5

- **PELISSIER et al.** A 112Mb/s Full Duplex Remotely-Powered Impulse-UWB RFID Transceiver For Wireless NV-Memory Applications. *IEEE JOURNAL OF SOLID-STATE CIRCUITS,* Avril 2011, vol. 46 (4